(19) Europäisches Patentamt
European Patent Office
Office européen des brevets

(11) Veröffentlichungsnummer: **0 182 189**
**B1**

# (12) EUROPÄISCHE PATENTSCHRIFT

(45) Veröffentlichungstag der Patentschrift: **03.08.88**

(51) Int. Cl.⁴: **C 08 G 63/20**, C 08 G 63/18

(21) Anmeldenummer: **85114021.0**

(22) Anmeldetag: **05.11.85**

(54) **Voll-aromatische Polyester, Verfahren zu ihrer Herstellung und ihre Verwendung zur Herstellung von Formkörpern.**

(30) Priorität: **17.11.84 DE 3442125**

(43) Veröffentlichungstag der Anmeldung: **28.05.86 Patentblatt 86/22**

(45) Bekanntmachung des Hinweises auf die Patenterteilung: **03.08.88 Patentblatt 88/31**

(84) Benannte Vertragsstaaten: **DE FR GB IT NL**

(56) Entgegenhaltungen:
**EP - A - 0 010 602**
**EP - A - 0 026 868**
**FR - A - 2 088 381**

(73) Patentinhaber: **BAYER AG, Konzernverwaltung RP Patentabteilung, D-5090 Leverkusen 1 Bayerwerk (DE)**

(72) Erfinder: **Freitag, Dieter, Dr., Hasenheide 10, D-4150 Krefeld 1 (DE)**
Erfinder: **Bottenbruch, Ludwig, Dr., Woehlerstrasse 5, D-4150 Krefeld 1 (DE)**
Erfinder: **Rathmann, Dietrich, Dr., Alte Landstrasse 119, D-5090 Leverkusen 1 (DE)**
Erfinder: **Tacke, Peter, Dr., Brandenburger Strasse 12, D-4150 Krefeld (DE)**

**EP 0 182 189 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Bisphenol-A/Terephthalsäure-Polyester mit Alkylarylendgruppen, ein Phasengrenzflächenverfahren zu ihrer Herstellung und die Verwendung dieser Polyester zur Herstellung von Formkörpern.

Bisphenol-A/Terephthalsäure-Polyester sind bekannt. Ihre Herstellung nach dem Phasengrenzflächenverfahren ist beisielsweise bei W.M. Eareckson, J. Polym. Sci., Vol. XL, S. 399 - 406 (1959), beschrieben.

Das Material besitzt hervorragende Wärmeformbeständigkeit und gute Brandwidrigkeit, bei technischen Chemiewerkstoffen begehrte Eigenschaften. Die Herstellung ist jedoch schlecht reproduzierbar, da der Polyester in den für das Phasengrenzflächenverfahren üblichen organischen Lösungsmitteln wenig löslich ist und häufig schon ausfällt, bevor ein Molekulargewicht erreicht wird, das eine Verwendung des Materials für verwertbare Spritzgussteile ermöglicht. Die Aufarbeitung solcher Reaktionsgemische mit Feststoffanteilen ist ausserdem sehr aufwendig.

Nach dem Umesterungsverfahren aus Diphenolbisacetaten und Terephthalsäure hergestellte Polyester besitzen eine unzureichende Hydrolysebeständigkeit. Hinzu kommt, dass während der Umesterung ein Teil der eingesetzten Terephthalsäure aus dem Reaktionsgemisch absublimiert. Hierdurch wird einerseits die Stöchiometrie gestört — es sind keine ausreichenden Molekulargewichte erzielbar —, andererseits führt die Verstopfung der Vakuumleitungen durch die Terephthalsäure zu Störungen.

Zu der Erfindung haben Untersuchungen geführt, Bisphenol-A/Terephthalsäure-Polyester mit guter Hydrolysebeständigkeit bereitzustellen, die nach dem Phasengrenzflächenverfahren reproduzierbar hergestellt werden können, ohne dass es zu vorzeitiger Ausfällung kommt.

Überraschenderweise wurde gefunden, dass Bisphenol-A/Terephthalsäure-Polyester,die bestimmte Alkylarylreste als Endgruppen enthalten, die gestellte Aufgabe lösen.

Gegenstand der Erfindung sind voll-aromatische Bisphenol-A-Polyester, die als Dicarbonsäurereste ausschliesslich Terephthalsäurereste enthalten, mit einem Gehalt von 0,01 bis 6, vorzugsweise 0,1 bis 4 Mol-%, bezogen auf Bisphenolreste, Endgruppen der Struktur

$$-Y-AR_n \qquad (I)$$

worin

-Y- -O-, -C-, -O-C-,
       ‖      ‖
       O      O

A einen zwei- oder dreiwertigen ein- oder zweikernigen aromatischen Rest, der auch 1 bis 2 Heteroatome (vorzugsweise Stickstoff) enthalten kann,

R einen verzweigten oder unverzweigten $C_5$-$C_{10}$-, vorzugsweise $C_7$-$C_9$-Alkyl- oder Alkoxyrest und

n 1 oder 2 bedeuten.

Bevorzugte Reste A sind Naphthylen, Bisphenylen, Chinolylen und Furylen, insbesondere aber Phenylen.

Bevorzugte Reste R sind Isononyl und Isooctyl:

            CH3        CH3
             |           |
-CH2-CH2-CH - CH2-CH - CH2-CH3     und

CH3      CH3
 |          |
-C  -  CH2-C  -  CH3
 |          |
CH3      CH3

An den aromatischen Ringsystemen A können die Liganden Y und R jede beliebige Position zueinander einnehmen. Bei Phenylenringen sind die m- und p-Positionen bevorzugt.

Besonders bevorzugte Endgruppen sind p-Isooctylphenoxy-, p-Isooctylbenzoat, p-Isononlylphenoxy- und p-n-Hexylphenoxy.

Die erfindungsgemässen aromatischen Polyester besitzen in der Regel relative Lösungsviskositäten ($\eta$rel) von 1,18 bis 2, vorzugsweise von 1,2 bis 1,5 (gemessen in einer Lösung von 0,5 g Polyester in 100 ml Lösung). Als Lösungsmittel dient ein Gemisch 1:1 (Gewichtsteile) aus Phenol/o-Dichlorbenzol.

Die Herstellung aromatischer Polyester nach dem Phasengrenzflächenverfahren ist bekannt und z.B. in der DE-OS 2 940 024 (≙ US-PS 4 334 053) beschrieben.

Weiterer Gegenstand der Erfindung ist ein Verfahren zur Herstellung der neuen aromatischen Polyester nach dem Phasengrenzflächenverfahren, dadurch gekennzeichnet, dass man 0,01 bis 6, vorzugsweise 0,1 bis 4 Mol-%, bezogen auf Bisphenol, Verbindungen der Formel

$$Z-AR_n \qquad (II)$$

worin

Z -OH, -C-X, -O-C-X,
        ‖        ‖
        O        O

X Chlor, Brom bedeuten und

A, R und n die oben angegebene Bedeutung besitzen,

in einem beliebigen Stadium der Reaktion zusetzt.

In der Regel wird man entweder den Kettenabbrecher II — gegebenenfalls in einem Lösungsmittel — mit dem Terephthalsäuredichlorid oder dessen Lösung in das gerührte Zweiphasengemisch aus alkalischer wässriger Bisphenolat-A-Lösung, Katalysator und einem organischen Lösungsmittel für den aromatischen Polyester eintragen oder — falls der Kettenbrecher II phenolischer Natur ist — diesen zusammen mit dem Bisphenol von Anfang an der wässrigen Phase zusetzen.

Bevorzugte organische Lösungsmittel für den aromatischen Polyester sind Methylenchlorid, Chloroform, 1,2-Dichlorethan, Chlorbenzol, Toluol und deren Gemische.

Bevorzugte Katalysatoren für das Phasengrenzflächenverfahren sind tertiäre Amine und quatäre Ammonium- und Phosphoniumsalze, wie z.B. Triethylamin, N-Ethylpiperidin, Tetraethylammoniumchlorid, Tetrabutylammoniumbromid, Triethylbenzylammoniumchlorid, N,N-Diethylpiperidylinumchlorid, Tetrabutylphosphoniumbromid.

Die erfindungsgemässen aromatischen Polyester können Stabilisatoren, Fliessmittel, Weichmacher, Entformungsmittel, Verstärkungs- und Füllstoffe, wie z.B. Glasfasern, Glaskugeln, Asbest- und Kohlenstoffasern, Kieselgur, Kaolin, Kreide, Gesteinsmehl sowie Pigmente enthalten.

Die erfindungsgemässen aromatischen Polyester können nach üblichen Verfahren in Spritzgiessmaschinen zu Formkörpern oder in Extrudern zu Halbzeug verarbeitet werden.

Sie finden überall dort Anwendung, wo hinsichtlich Hydrolysefestigkeit, Wärmeformbeständigkeit und Stabilität gegen oxidativen Abbau besonders hohe Anforderungen an die Formteilqualität gestellt werden, z.B. in der gesamten Elektrotechnik.

Weiterer Gegenstand der Erfindung ist die Verwendung der neuen Polyester zur Herstellung von Formkörpern.

Die in den nachfolgenden Beispielen aufgeführten Prozente bedeuten — falls nicht anders angegeben — Gewichtsprozente.

*Beispiel 1*

In einem Stahlkessel mit intensiv wirkendem Rührer wurden unter Stickstoffatmosphäre 1,824 kg (8 Mol) Bisphenol A, 1,465 kg (1648 Mol) 45%ige wässrige Natronlauge, 50 l Wasser, 25,7 g (1 Mol-%, bezogen auf Bisphenol) Tetrabutylammoniumbromid und 37 l Dichlormethan gefüllt und das Gemisch bis zur vollständigen Lösung des Bisphenols gerührt.

In das intensiv gerührte Zweiphasengemisch wurden dann unter Kühlung innerhalb von 1 min 1,624 kg (8 Mol) Terephthalsäuredichlorid und 65,6 g (4 Mol-%) p-Isooctylphenol, gelöst in 4,4 l Dichlormethan, gegeben und das Rühren 30 min fortgesetzt.

Nach der Phasentrennung wurde die organische Phase zunächst mit verdünnter Phosphorsäure, dann mit Wasser gewaschen und zur Isolierung des erhaltenen Polyesters zur Trockne gedampft.

*Beispiel 2*

Beispiel 1 wurde mit 4 Mol-% (70,5 g) Isononylphenol

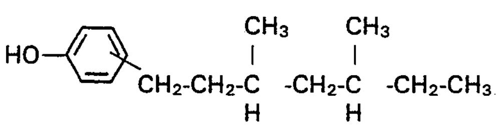

als Kettenabbrecher und Triethyl-benzyl-ammonium-chlorid als Katalysator wiederholt.

*Beispiel 3*

Beispiel 1 wurde wiederholt mit 4 Mol-% (86 g) Chlorkohlensäureester von Isooctylphenol als Kettenabbrecher und 5 g N-Ethylpiperidin als zusätzlicher Katalysator.

*Vergleichsbeispiele*

Beispiel 1 wurde mit dem Unterschied wiederholt, dass das p-Isooctylphenol durch jeweils 4 Mol-% eines anderen Kettenabbrechers ersetzt wurde, nämlich

1) Phenol
2) Benzoylchlorid
3) tert-Butylphenol
4) Dodecylphenol
5) Octadecylphenol

Die folgende Tabelle gibt die relativen Viskositäten und die Glasübergangstemperaturen (jeweils Mittelwerte aus 3 Ansätzen) an.

TABELLE

| Beispiel | ηrel | Ausfällung | Glasübergangstemperaturen (°C) |
|---|---|---|---|
| 1 | 1,465 | nein | 224 |
| 2 | 1,451 | nein | 222 |
| 3 | 1,464 | nein | 225 |
| Vergleichsbeispiele | | | |
| 1 | 1,246 | ja | 196 |
| 2 | 1,253 | ja | 198 |
| 3 | 1,258 | ja | 198 |
| 4 | 1,44 | nein | 207 |
| 5 | 1,462 | nein | 208 |

**Patentansprüche**

1. Voll-aromatische Bisphenol-A-Polyester, die als Dicarbonsäurereste ausschliesslich Terephthalsäurereste enthalten, mit einem Gehalt von 0,01 bis 6 Mol-%, bezogen auf Bisphenolreste, Endgruppen der Struktur

$$-Y-AR_n \qquad (I)$$

worin

-Y- -O-, -C-, -O-C-,
 ‖ ‖
 O O

A einen zwei- oder dreiwertigen ein- oder zweikernigen aromatischen Rest,

R einen verzweigten oder unverzweigten $C_5$-$C_{10}$-Alkyl- oder Alkoxyrest und

n 1 oder 1 bedeuten.

2. Polyester nach Anspruch 1, dadurch gekennzeichnet, dass sie 0,1 bis 4 Mol-%, bezogen auf Bisphenolreste, Endgruppen der Struktur I enthalten.

3. Polyester nach Ansprüchen 1 und 2, dadurch gekennzeichnet, dass der aromatische Rest A 1 bis 2 Heteroatome enthält.

4. Polyester nach Ansprüchen 1 bis 3, dadurch gekennzeichnet, dass die Endgruppen p-Isooctylphenoxyreste sind.

5. Verfahren zur Herstellung der Polyester nach Ansprüchen 1 bis 4 nach dem Phasengrenzflächenverfahren, dadurch gekennzeichnet, dass man 0,01 bis 6 Mol-%, bezogen auf Bisphenol, Verbindungen der Formel

$$Z-AR_n \qquad (II)$$

worin

worin

Z -OH, -C-X, -O-C-X,
‖ ‖
O O

X Chlor, Brom bedeuten und

A, Z und n die in Anspruch 1 angegebene Bedeutung besitzen,

in einem beliebigen Stadium der Reaktion zusetzt.

6. Verfahren nach Anspruch 5, dadurch gekennzeichnet, dass man 0,1 bis 4 Mol-%, bezogen auf Bisphenol, Verbindungen der Formel II zusetzt.

7. Verwendung der Polyester nach Ansprüchen 1 bis 4 zur Herstellung von Formkörpern.

**Claims**

1. Fully aromatic bisphenol A polyesters containing only terepthalic acid residues as dicarboxylic acid residues and having a content of 0.1 to 6 mol-%, based on bisphenol groups, of terminal groups having the following structure

$-Y-AR_n$ (I)

in which

-Y- represents -O-, -C-, -O-C-,
‖ ‖
O O

A is a difunctional or trifunctional aromatic radical,

R is a branched or unbranched $C_5$-$C_{10}$ alkyl or alkoxy radical and

n is 1 or 2.

2. Polyesters as claimed in claim 1, characterized in that they contain from 0.1 to 4 mol-%, based on bisphenol groups, of terminal groups corresponding to formula I.

3. Polyesters as claimed in claims 1 and 2, characterized in that the aromatic radical A contains 1 to 2 hetero atoms.

4. Polyesters as claimed in claims 1 to 3, characterized in that the terminal groups are p-isooctyl phenoxy radicals.

5. A process for the preparation of the polyesters claimed in claims 1 to 4 by the interfacial method, characterized in that 0.01 to 6 mol-%, based on bisphenol, of compounds corresponding to the following formula

$Z-AR_n$ (II)

in which

Z represents -OH, -C-X, -O-C-X,
‖ ‖
O O

X represents chlorine, bromine and

A, Z and n are as defined in claim 1,

is added at any stage of the reaction.

6. A process as claimed in claim 5, characterized in that 0.1 to 4 mol-%, based on bisphenol, of compounds corresponding to formula II is added.

7. The use of the polyesters claimed in claims 1 to 4 for the production of molded articles.

**Revendications**

1. Polyesters de bisphénol A totalement aromatiques qui contiennent exclusivement comme restes d'acide dixarboxylique des restes d'acide téréphtalique, ayant une teneur de 0,1 à 6 mol%, par rapport aux restes bisphénol, de groupes terminaux de structure

$-Y-AR_n$ (I)

dans laquelle

Y représente -O-, -C-, -O-C-,
‖ ‖
O O

A représente un reste aromatique mono- ou dinucléaire di- ou trivalent,

R représente un reste alkyle ou alcoxy en $C_5$-$C_{10}$ ramifié ou non ramifié, et

n est égal à 1 ou 2.

2. Polyesters selon la revendication 1, caractérisés en ce qu'ils contiennent 0,1 à 4 mol%, par rapport aux restes bisphénol, de groupes terminaux de structure I.

3. Polyesters selon les revendications 1 et 2, caractérisés en ce que le reste aromatique A contient 1 à 2 hétéroatomes.

4. Polyesters selon les revendications 1 à 3, caractérisés en ce que les groupes terminaux sont des restes p-isooctylphénoxy.

5. Procédé pour la fabrication des polyesters selon les revendications 1 à 4 par le procédé à l'interphase, caractérisé en ce que l'on ajoute à un stade quelconque de la réaction 0,01 à 6 mol%, par rapport au bisphénol, de composés de formule

$Z-AR_n$ (II)

dans laquelle

Z représente -OH, -C-X, -O-C-X,
‖ ‖
O O

X représente le chlore ou le brome, et

A, Z et n ont la signification indiqueé à la revendication 1.

6. Procédé selon la revendication 5, caractérisé en ce que l'on ajoute 0,1 à 4 mol%, par rapport au bisphénol, de composés de formule II.

7. Utilisation des polyesters selon les revendications 1 à 4 pour la fabrication de corps moulés.